# EUROPEAN PATENT APPLICATION

(11) **EP 1 672 516 A2**
(43) Date of publication of application: **21.06.2006**
(21) Application number: 06075759.8
(22) Date of filing: 25.11.1997
(51) Int. Cl.: G06F 17/00

(54) **Automated banking machine apparatus and system**

(30) Priority: 27.11.1996 US 31956 P
(62) Divisional of application: 97951463.5
(71) Applicant: DIEBOLD, INCORPORATED, North Canton, OH 44720 (US)
(72) Inventor: Drummond, Jay Paul, N.W. Massillon, OH 44646 (US); Blackson, Dale, Canton, OH 44718 (US); Chen, Lillei, N.W. North Canton, OH 44720 (US); Cichon, Bob, N.W. Canton, OH 44708 (US); Covert, Mark, N.W. Canton, OH 44709 (US); Lepper, Bradwick Q., N.W. North Canton, OH 44720 (US); Moales, Mark A., North Canton, OH 44720 (US); Smith, Mark D., N.W. North Canton, OH 44720 (US); Lemley, Robert J., Lorena, TX 76655 (US); Califf, Micharl E., Jr., Pfugerville, TX 78660 (US); Joyce, Shawn D., Temple, TX 75602 (US); Moore, Philip S., Waco, TX 76710 (US); Swingler, Steven C., China Spring, TZ 76655 (US)
(74) Representative: Meldrum, David James

(57) **Abstract**

The banking machine (12) include a computer (34) which reads (38) an indicia from a user's card corresponding to a system address and connects the banking machine (12) to the home or foreign servers (20, 22, 24, 26, 28, 90, 96) designated by the system address through the Internet (16) or a wide area network (18). Computer (34) then exchanges HTML documents and TCP/IP messages with servers (20, 22, 24, 26, 28, 90, 96) to conduct the user's transaction. The exchanged HTML documents and TCP/IP messages which are processed in a HTML document handling portion (76, 80, 82) are passed to a device application portion (84) and device interfacing software portion (64) in order to maintain local control of the operation of devices (30, 36) including user interfacing devices (30, 38, 40, 42, 44, 46, 44) in the automated banking machine (12). In this way the connected server (20, 22, 24, 26, 28, 90, 96) remotely operates the banking machine (12) until the completion of transactions by the user.

## Description

### TECHNICAL FIELD

This invention relates to automated banking machines. Specifically this invention relates to an automated banking machine apparatus and system that is capable of use in a wide area network, and which provides a user with a familiar interface from their home institution at banking machines operated by other institutions.

### BACKGROUND ART

Automated banking machines are well known. A common type of automated banking machine used by consumers is an automated teller machine ("ATM"). ATMs enable customers to carry out banking transactions. Common banking transactions carried out with ATMs include the dispensing of cash, the making of deposits, the transfer of funds between accounts, the payment of bills and account balance inquiries. The type of banking transactions a customer can carry out are determined by capabilities of the particular banking machine and the programming of the institution operating the machine.

Currently ATMs are operated in proprietary communications networks. These networks interconnect ATMs operated by financial institutions and other entities. The interconnection of the networks often enables a user to use a banking machine operated by another institution if the foreign institution's banking machine is interconnected with the network that includes the user's institution. However when the customer operates the foreign institution's machine the customer must operate the machine using the customer interface that has been established by the foreign institution for its banking machines. In addition the user is limited to the transaction options provided by the foreign institution.

A customer may encounter difficulties when using a foreign institution's machine. Problems may occur because the user is not familiar with the type of machine operated by the foreign institution. Confusion may result because the customer does not know which buttons or other mechanisms to actuate to accomplish the desired transactions. The transaction flow for a customer at a foreign institution machine may be significantly different from machines operated by the user's home institution. This may be particularly a problem when the user is from another country and is not familiar with the type of banking machine or the language of the interface provided by the foreign institution.

A foreign institution may also provide different types of transactions than the user is familiar with at their home institution. For example the user's home institution may enable the transfer of funds between accounts through their automated banking machines, to enable the user to maintain funds in higher interest bearing accounts until they are needed. If the foreign institution does not provide this capability, the user will be unable to do this when operating the foreign machine. The inability of a user at a foreign machine to conduct the transactions that they are accustomed to may present problems.

The networks that operate automated teller machines and other types of automated banking machines generally operate proprietary networks to which access is restricted. This is necessary to prevent fraud or tampering with the network or user's accounts. Proprietary networks are also generally used for the transmission of credit card messages and other financial transaction messages. Access to such credit card processing systems is also restricted primarily for purposes of maintaining security.

Communication over wide area networks enables messages to be communicated between distant locations. The best known wide area network is the Internet which can be used to provide communication between computers throughout the world. The Internet is not widely used for financial transaction messages because it is not a secure system. Messages intended for receipt at a particular computer address may be intercepted at other addresses without detection. Because the messages may be intercepted at locations that are distant in the world from the intended recipient, the potential for fraud and corruption is great.

Companies are beginning to provide approaches for more secure transmission of messages on the Internet. Encryption techniques are also being applied to Internet messages. However the openness of the Internet has limited its usefulness for purposes of financial messages, particularly financial messages associated with the operation of automated banking machines.

Thus there exists a need for an automated banking machine and system that can be used in a wide area network such as the Internet while providing a high level of security. There further exists a need for an automated banking machine and system which provides a user with the familiar interface and transaction options of their home institution when operating foreign institution machines.

### DISCLOSURE OF INVENTION

It is an object of the present invention to provide an automated banking machine at which a user may conduct transactions.

It is a further object of the present invention to provide an automated banking machine that may be operated through connection to a wide area network.

It is a further object of the present invention to provide an automated banking machine and system that provides a user with a familiar interface and transaction options of their home institution at machines operated by foreign institutions.

It is a further object of the present invention to provide an automated banking machine that communicates using HTML documents and TCP/IP messages.

It is a further object of the present invention to provide an automated banking machine that enables the connection of the banking machine to a user's home institution through HTML documents and TCP/IP messages generated responsive to indicia on a card input by a user.

It is a further object of the present invention to provide an automated banking machine and system that accomplishes transactions over a wide area network while maintaining a high level of security.

It is a further object of the present invention to provide an automated banking machine and system that controls connection of the banking machine to foreign addresses through a proxy server.

It is a further object of the present invention to provide an automated banking machine that limits the operation of devices in the machine through a local device server.

It is a further object of the present invention to provide an automated banking machine and system that is operable through connection to the Internet.

Further objects of the present invention will be made apparent in the following Best Modes for Carrying Out Invention and the appended Claims.

The foregoing objects are accomplished in a preferred embodiment of the invention by an automated banking machine that includes an output device such as a display screen, and an input device such as a touch screen or a keyboard. The banking machine further includes devices such as a dispenser mechanism for sheets of currency, a printer mechanism, a card reader/writer, a depository mechanism and other physical devices that are used by the machine to accomplish banking transactions.

The banking machine further includes a computer. The computer is in operative connection with the output device and the input device, as well as with the sheet dispenser mechanism, card reader and other physical devices in the banking machine. The computer includes software programs that are executable therein. The software programs include an HTML document handling portion. The HTML document handling portion operates to send and receive HTML documents. The HTML document handling portion is preferably in connection with the output device to display screens including hypertext link indicators. The HTML document handling portion is also preferably in connection with the input device which enables user selection and the generation of response messages from the computer. The HTML document handling portion preferably operates in connection with a JAVA software environment and has the capability of executing instructions in JAVA script transmitted with HTML documents.

The software in the computer further preferably includes a device application portion. The device application portion includes software that is operative to control the sheet dispenser and other devices. In the preferred form of the invention the device application portion includes a plurality of JAVA applets for operating the devices in the machine.

The computer in the automated banking machine further includes a device interfacing software portion. The device interfacing software portion operates to receive messages from the device application portion and to cause the devices to operate through appropriate hardware interfaces. In the preferred form of the automated banking machine, the HTML document handling portion, device application portion and device interfacing software portion each reside on the same computer and communicate at different IP ports.

The automated banking machine of the invention preferably communicates using TCP/IP messages in an intranet which includes a plurality of such machines. The intranet is in turn connected to at least one computer which is operated by a home institution. The home institution is the entity that operates the banking machines.

The computer of the home institution preferably includes a home HTTP server, a proxy server and a device server. The proxy server communicates through the intranet with the HTML document handling portion of the software in each of the banking machines. The proxy server is also connectable to a wide area network, such as the Internet, to which foreign servers are connected. The device server is operative to pass messages between the device application portion and the device interfacing software portion of the banking machines. The device server includes monitor software which monitors and selectively limits the use and operation of the devices in the banking machine. This provides a level of security.

The automated banking machine and system is operative to place a user in connection with the institution where they have their accounts. This can be either the home institution that operates the banking machine where the user is present, or a foreign institution which is connected to the wide area network. To operate the banking machine a user inputs an address, such as a URL address, through an address input device. The HTML document handling portion operates to connect the banking machine to the server corresponding to that address. This is preferably accomplished by the user having indicia representative of the address on a card that is read by the banking machine.

The HTML document handling portion is responsive to the address on the card to connect through the proxy server to the user's institution. If the user's home institution address corresponds to the home server, the banking machine operates responsive to messages from the home server. If however the user's input address corresponds to an address of a foreign server, the proxy server is operative to communicate through the wide area network with the foreign server at the customer's home institution. If the customer causes the machine to connect a server operated by a foreign institution, the HTML documents sent from the foreign institution correspond to those normally provided by the foreign institution. As a result the customer is familiar with the interface produced by these documents and will be able to more readily operate the banking machine.

The foreign server or home server operate the banking machine by sending HTML documents that include instructions for operating the devices in the banking machine. The instructions are transmitted from the HTML document handling portion to the device application portion of the software, which operates the devices in response to the instructions. The instructions from the device application portion to the devices in the automated banking machine are passed through the device server of the home institution. This helps to maintain security. In addition, the proxy server includes screening software which limits the foreign servers which may connect to and operate the banking machine. This is referred to as a "fire wall. "

### BRIEF DESCRIPTION OF DRAWINGS

Figure 1 is a schematic view of a network configuration including the automated banking machine apparatus and system of the present invention.
Figure 2 is a schematic view of a preferred embodiment of an automated banking machine of the present invention.
Figures 3 through 24 show schematic views of the automated banking machine, an intranet connecting the banking machine to a computer system of a home bank and a wide area network connecting the computer system of the home bank to a foreign bank.

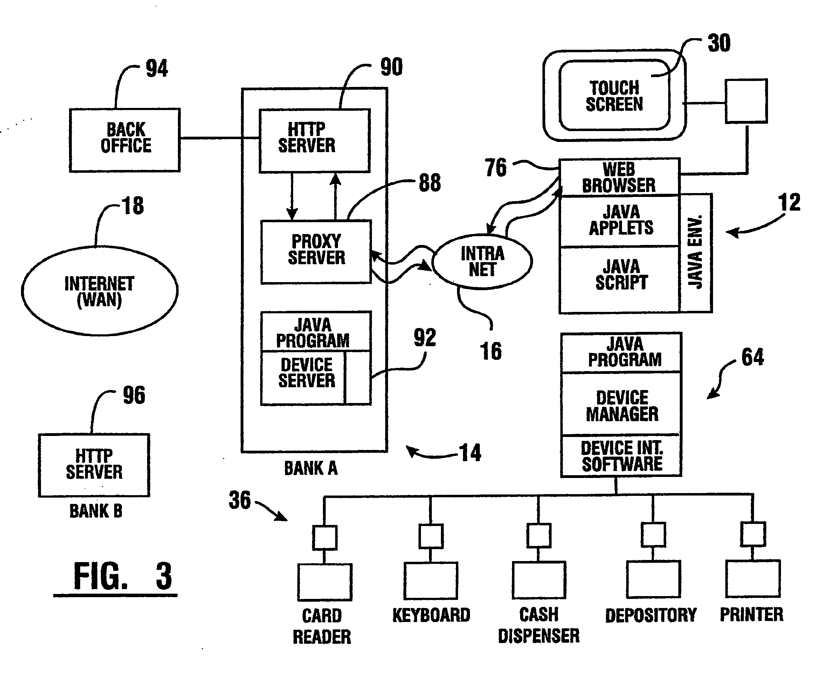

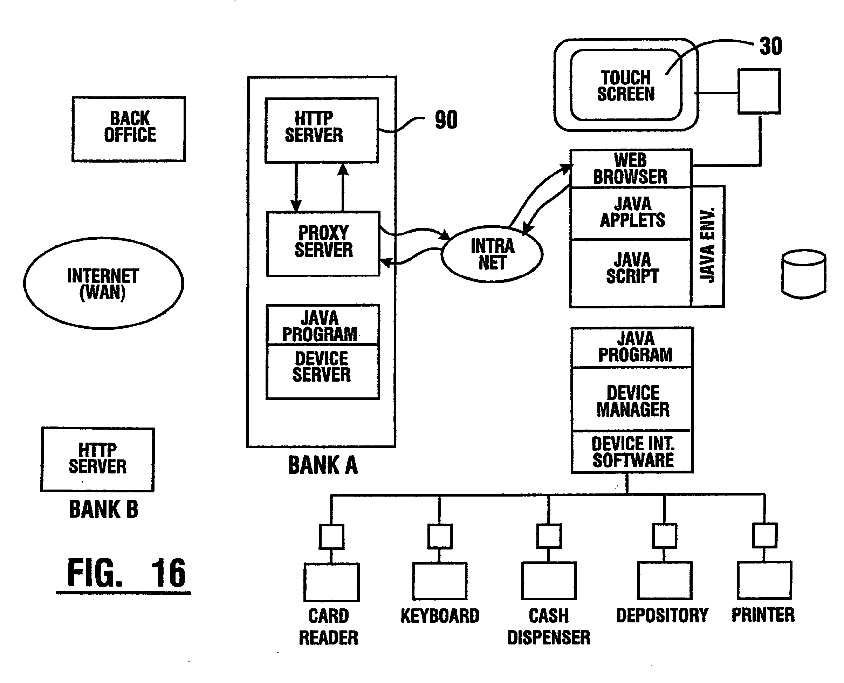

Figures 3 through 18 schematically represent steps in a transaction carried out at the banking machine with the computer system of the home bank.

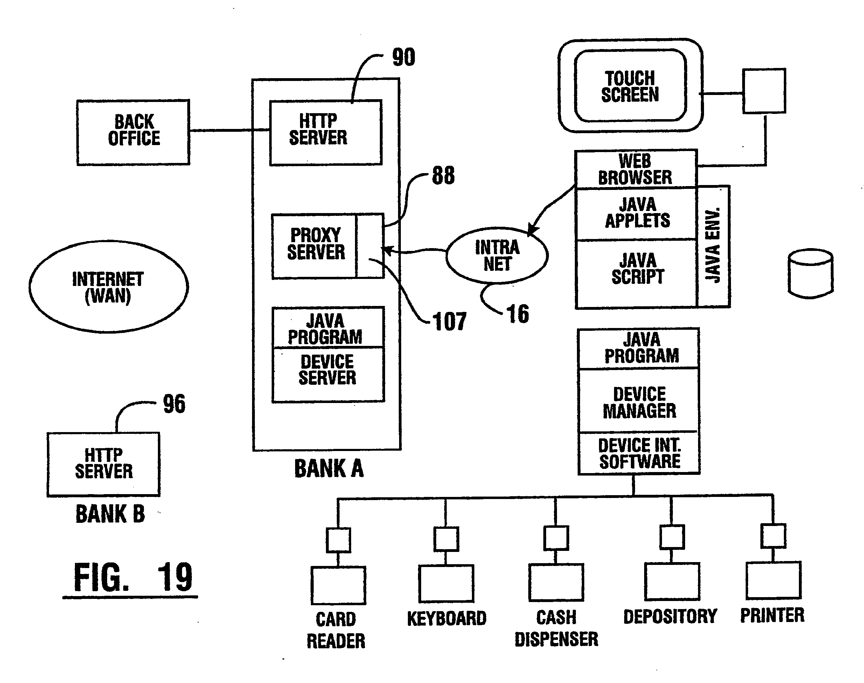

Figures 19 through 24 schematically represent steps in a transaction carried out at the banking machine with the computer system of the foreign bank.

### BEST MODES FOR CARRYING OUT INVENTION

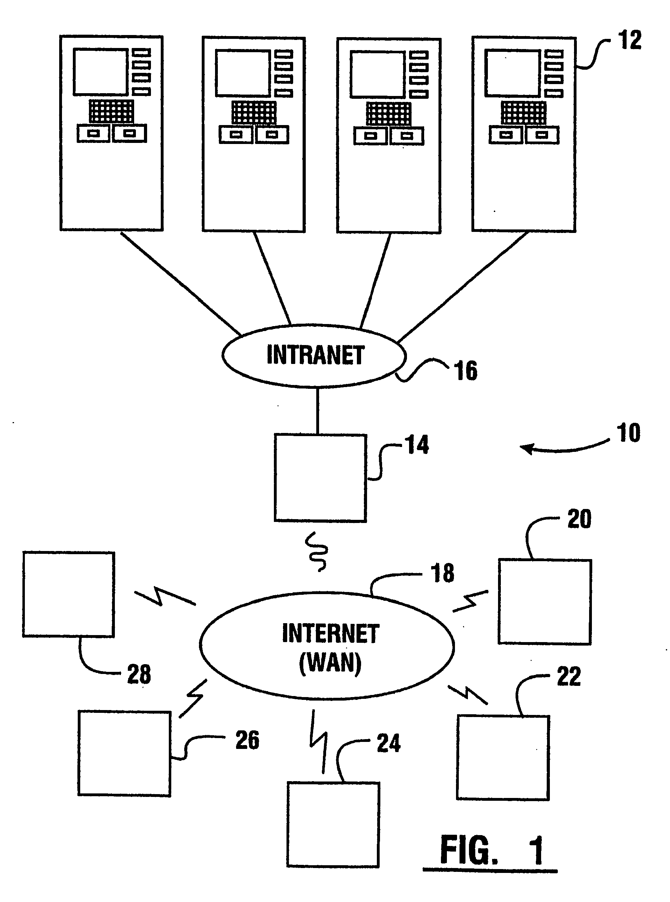

Referring now to the drawings and particularly to Figure 1, there is shown therein a network configuration schematically indicated 10, which includes the automated banking machine apparatus and system of a preferred embodiment of the present invention. Network 10 includes a plurality of automated banking machines 12 which in the preferred embodiment of the invention are ATMs. ATMs 12 are connected to a computer system of a home bank schematically indicated 14. Home bank computer system 14 is the computer system that is operated by the bank or other institution which has primary responsibility for the ATMs 12. Home bank computer system 14 is connected to the ATMs 12 through an intranet 16. Intranet 16 is preferably a local or proprietary network that provides communication between the computer system 14 and the banking machines 12 using messages in the transmission control protocol/internet protocol ("TCP/IP") format.

The messages that are communicated through the intranet 16 are preferably TCP/IP messages and hypertext mark up language ("HTML") documents. In the preferred embodiment of the invention the HTML documents sent through intranet 16 include embedded object oriented programming instructions, preferably in the JAVA® format which has been developed by Sun Microsystems. The messages sent through intranet 16 may be sent in an encrypted or unencrypted form depending on the nature of the system and the security needs of the home bank.

Home bank computer system 14 is also connectable as shown to a wide area network 18. In the preferred embodiment of the invention the wide area network 18 is the Internet. In other embodiments of the invention, other wide area networks may be used. The wide area network preferably communicates messages in TCP/IP between numerous computer systems connected to the wide area network. These foreign computer systems are schematically represented by servers 20, 22, 24, 26 and 28. It should be understood that servers 20 through 28 may be operated by or connected to other financial institutions throughout the world. Servers 20 through 28 preferably operate by communicating HTML documents.

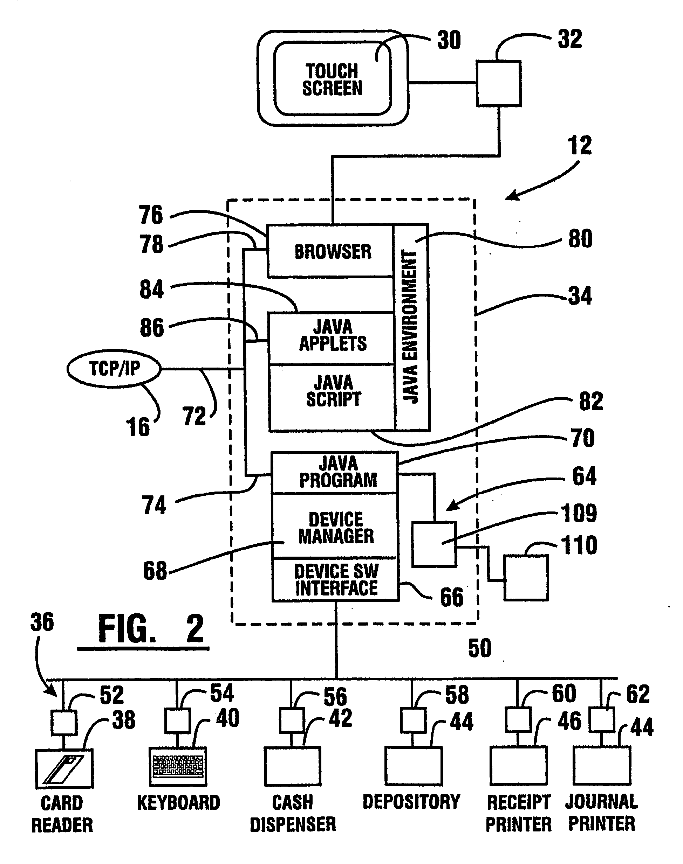

Figure 2 shows a schematic view of the ATM 12 used in connection with a preferred embodiment of the invention. ATM 12 includes a touch screen 30. Touch screen 30 includes a display screen which serves as an output device for communication with a user of the machine. Touch screen 30, because it is a touch screen, also serves as an input device for receiving input instructions from a user. Touch screen 30 is connected through an interface 32 to a computer 34 which is preferably housed within the machine.

Computer 34 is also in connection with a plurality of devices 36 which are included in ATM 12. Devices 36 include for example, a card reader/writer mechanism 38 and a keyboard 40. Devices 36 further include a sheet dispenser mechanism 42 which is operative to dispense sheets, which in the preferred form of the invention are currency or bank notes. Devices 36 also include a depository 44 for accepting deposits into a secure location in the machine. A receipt printer 46 for providing transaction receipts to customers is also included among devices 36. A journal printer 48 is also included among the devices for keeping a hard copy record of transaction information.

Each of the devices is connected to an internal control bus 50 within the banking machine 12. The control bus 50 outputs the internal messages to the particular devices. Each device has an appropriate hardware interface which enables the particular device to operate in response to the messages transmitted to it on control bus 50. Card reader/writer 38 has a hardware interface schematically shown as 52. Hardware interfaces 54, 56, 58, 60 and 62 are respectively operative to connect keyboard 40, sheet dispenser mechanism 42, depository mechanism 44, receipt printer mechanism 46 and journal printer mechanism 48 to the control bus 50.

Computer 34 has several software programs that are executable therein. In the preferred embodiment of the invention these software programs include a device interfacing software portion generally indicated 64. Device interfacing software portion 64 preferably includes a software device interface 66 that communicates electronic messages with the control bus 50. The device interface software portion 64 also preferably includes a device manager 68. The device manager is preferably operative to manage the various devices 36 and to control their various states so as to be assured that they properly operate in sequence. The device manager is also preferably operable to create device objects in the software so as to enable operation of the devices by the object oriented program 70. Device interfacing software portion 64 also includes the object oriented program portion 70, which in the preferred embodiment is an application written in the JAVA language. Program 70 works in conjunction with the device manager to receive object oriented JAVA messages which cause the devices to operate, and to transmit device operation messages indicative of a manner in which devices are operating and/or are receiving input data.

The device interfacing software portion 64 in the preferred embodiment operates on computer 34 and communicates through a physical TCP/IP connection 72 with the intranet 16. The physical connection may be analog dial-up, serial port, ISDN connection or other suitable connection. In the configuration of the system as shown, device interfacing software portion 64 communicates at the IP address of computer 34 and at an IP port or socket indicated 74 that is different from the other software applications. In other embodiments of the invention, device interfacing software portion 64 may operate in a different computer than the other software applications of the invention.

It should further be understood that although in the preferred embodiment of the invention the device interfacing portion 64 is software, in other embodiments of the invention all or portions of the instruction steps executed by software portion 64 may be resident in firmware or in other program media in connection with one or more computers, which are operative to communicate with devices 36.

Other software also operates in computer 34. This software includes HTML document handling software which includes a browser, schematically indicated 76. In the preferred embodiment of the invention the HTML document handling software includes a browser provided by Netscape® . However in other embodiments other HTML document handling and communicating software and browser software, such as Hot JAVA® by Sun Microsystems, may be used. Browser 76 communicates in computer 34 at an IP port indicated by 78.

Browser 76 is in operative connection with JAVA environment software 80 which enables computer 34 to run JAVA language programs. JAVA language programs have the advantage that they operate the same on a variety of hardware platforms without modification. This "write once\run anywhere" capability makes the JAVA environment well-suited for the preferred embodiment of the invention. However other embodiments may use different types of software programs.

The JAVA environment software 80 enables computer 34 to execute instructions in JAVA script, schematically indicated 82. The instructions that are executed by the computer in JAVA script are preferably embedded JAVA script commands that are included in the HTML documents which are received through the browser 76. The browser 76 in connection with the JAVA environment software 80 which executes instructions in the embedded JAVA script 82, serve as an HTML document handling software portion for transmitting and receiving HTML documents and TCP/IP messages through the IP port indicated by 78.

Computer 34 also has executable software therein having a device application portion 84. The device application portion 84 contains executable instructions related to operation of the devices 36. In the preferred embodiment of the invention, the device applications portion consists of a plurality of JAVA applets. The applets are also preferably operable to control and keep track of the status of the devices with which they are associated. Certain applets are also preferably operable to configure the browser to communicate messages. Certain applets manage security and authenticate entities that use the ATM.

In the preferred form of the invention, JAVA applets are associated with enabling the card reader mechanism, notifying the browser when a user's card data has been entered, operating the receipt printer mechanism, operating the journal printer mechanism, enabling the customer keyboard and receiving data input through the keyboard, operating the sheet dispenser mechanism, verifying digital signatures, handling encryption of messages, controlling the mix of bills dispensed from multiple sheet dispenser mechanisms, calculating foreign exchange, and ending a transaction and instructing the browser to return to communication with the home server. Of course, in other embodiments, other applets may be used to carry out various desired functions or to control devices in the machine. The device application portion 84 communicates in the computer 34 at an IP port indicated by 86.

In the preferred embodiment of the invention, the device application portion 84 of the software does not communicate its messages directly to the device interfacing software portion 64. As later explained, this provides heightened security. However it should be understood that embodiments of the invention may provide for the device application portion 84 to directly communicate device operation messages to the device program 70. This may be done either internally using TCP/IP, by delivery of messages in a conventional manner through a queue established in the operating system of the computer that is associated with the software that interfaces with the devices, or by direct call to this software.

From the foregoing discussion it will also be appreciated that certain applets in the device application portion 84 may correspond to devices which are not present in all automated teller machines. For example an automated teller machine that operates only as a cash dispenser does not include a depository mechanism like depository 44. To accommodate the situation where a user requests a transaction that is not physically possible with the ATM 12, the device interfacing software portion 64 may be programmed to provide an appropriate response message to indicate that the function is not available.

Alternatively, the device interfacing software portion may include a function which checks for the presence or absence of each type of physical device within the ATM. Information indicative of the devices present in the ATM may be included as part of the messages generated by the ATM. For example, information indicative of the devices which are operative in the ATM may be included as part of the URL addresses to which messages are directed by the ATM. In this way, the URL in the server to which the ATM connects may be configured for providing only HTML documents which correspond to the types of transactions that the ATM is capable of performing.

Figure 3 shows the ATM 12 in communication through the intranet 16 with the home bank computer system 14. Computer system 14 includes a proxy server 88. System 14 further includes a home HTTP server 90. Computer system 14 further includes a device server 92. The proxy server, home HTTP server and device server may be included in a single computer as shown, or in other embodiments may be separate computers.

The home HTTP server 90 is preferably in electronic communication with a back office computer system, schematically indicated 94. Back office computer system 94 is operative to keep track of debiting or crediting customers' accounts when they conduct transactions at the automated banking machines. In addition back office 94 is also preferably operative to track transactions for purposes of accomplishing settlements with other institutions who are participants in the system and whose customers conduct transactions at the ATMs 12.

As later explained, proxy server 88 is also operative to communicate through the wide area network 18 with foreign servers such as foreign server 96. Foreign server 96 is an example of a server operated by an institution other than the institution which operates computer system 14. It should be understood that while foreign server 96 is indicated as operated by a "foreign" institution, this is not necessarily indicative that the institution is located in another country from the institution that operates computer system 14. However, it is possible that foreign server 96 could be located in such a foreign country, including a country in which the language spoken is different from that generally used in the country where ATM 12 is located.

The conduct of transactions using the ATM 12 is now explained with reference to Figures 3-24. It should be understood that the following described transaction flows are merely examples of the operation of the apparatus and system, and the apparatus and system may be configured and operated in numerous ways to carry out transactions.

At the start of an exemplary transaction, as schematically represented in Figure 3, the browser 76 communicates through the intranet 16 with the proxy server 88. The communication is established preferably in a manner so that HTML documents intended to attract customers to the ATM 12 are displayed on the touch screen 30. This is referred to as the "attract mode." These HTML documents which produce the screens on the touch screen 30 originate from home HTTP server 90 which is operative to deliver the HTML documents to the proxy server. The home HTTP server sends the messages addressed to the IP port associated with browser 76, so as to cause their display at the proper ATM machine. It should be understood that while in this example, home server 90 is described as communicating with the ATMs through the proxy server 88, the server 90 may in other systems encompassed by the invention communicate directly with the ATMs.

A fundamental advantage of the system is that home HTTP server 90 may deliver documents selectively to the ATMs 12 connected to the intranet 16. These documents may include messages tailored to the particular location in which an ATM 12 is located. Examples of particularly tailored screens may include bilingual messages in certain neighborhoods or information concerning currency exchange at various ports of entry. The JAVA applets and JAVA script are loaded from a central location providing selective software distribution in the ATMs which may also be used to tailor the ATM to its environment.

The touch screen 30 in this exemplary transaction displays a screen which includes an icon which indicates in one or more languages that to commence a transaction a user should touch the screen. If a user touches the screen in the area of the icon an input signal is generated. The input signal is transmitted through the browser 76 to the home address of the home HTTP server 90 to which the ATM 12 is currently in communication. The message generated back to the home HTTP server is represented by the arrows directed from the browser 76 to the intranet 16, from the intranet 16 to the proxy server 88, and from the proxy server to the HTTP server 90 in Figure 3.

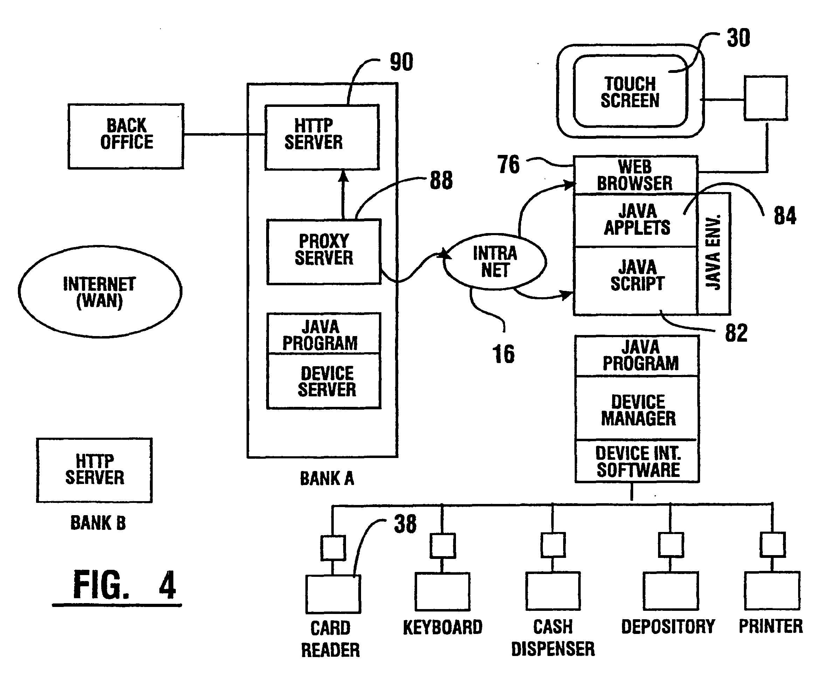

In response to the home HTTP server 90 receiving the message indicating that a customer has touched the icon on the screen, the home server is operative to send a message through the proxy server 88 (or in other embodiments directly) to the browser 76. This message preferably is an HTML document which produces a screen instructing the customer to insert their card into the card reader mechanism 38. The HTML document flow which is represented graphically in Figure 4, preferably also includes embedded JAVA script instructions which operate in the JAVA environment to communicate a message to the JAVA applet responsible for enabling the card reader in the device application portion 84.

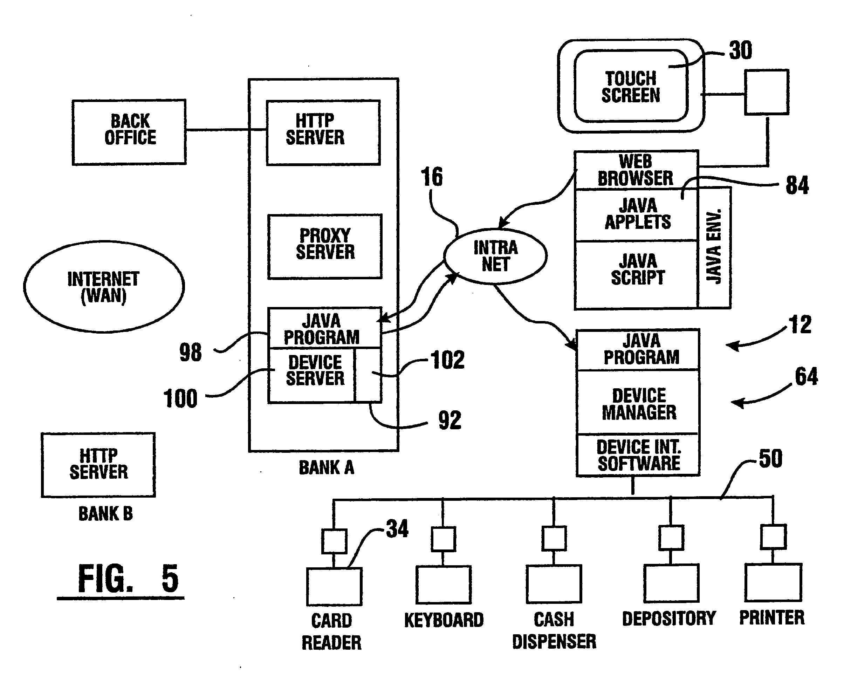

As shown in Figure 5, in response to the embedded JAVA script activating the JAVA applet associated with the enable card reader function, the JAVA applet in the device application portion 84 communicates with the device server 92. The device server 92 includes a device server program 98 which in the preferred embodiment is a JAVA program that enables communication with the JAVA applets and the device server application 100. The device server 92 further preferably includes a monitor software application 102 which is operative to monitor device operation instructions. The monitor software minimizes the risk of fraud or abuse in a manner later explained.

Returning to the sample transaction, in response to receiving the enable card reader message from the device application portion 84, the device server 92 is operative to generate a message through the intranet 16 to the device interfacing software portion 64 of the ATM 12. This message is directed to the IP port indicated 74 which is where the device interfacing software portion 64 communicates. In response to receiving this message, the software portion 64 is operative to send a message on the control bus 50 which enables card reader mechanism 34.

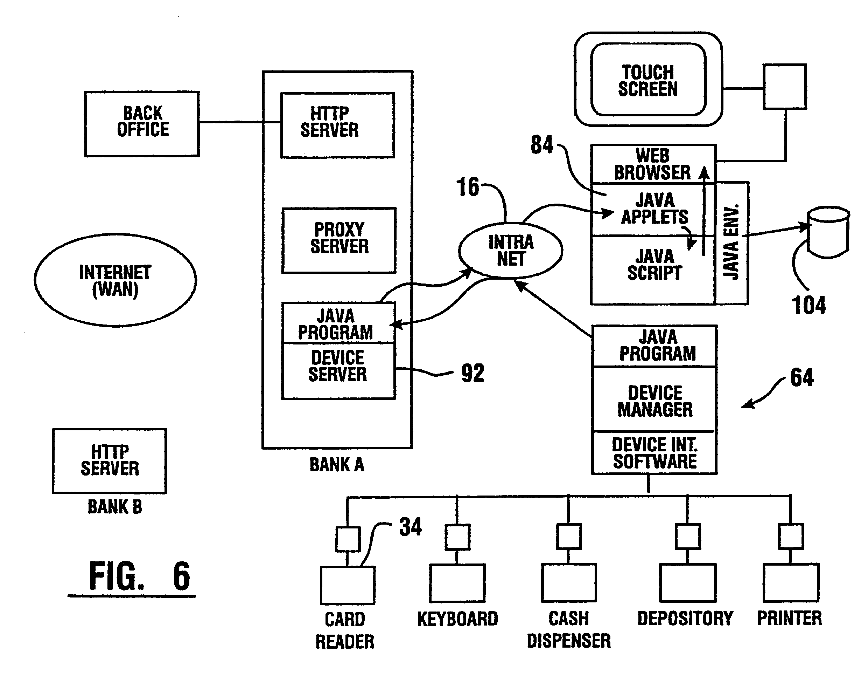

Continuing with the transaction as shown in Figure 6, the input of the card by the customer to the card reader 34 is operative to cause the card data to be read and the device interfacing program portion 64 to send a message to the device server 92 indicating the card data has been read. This message is transmitted by the device server through the intranet 16 to the device application portion 84. The device application portion then sends a message to the device server requesting the card data. The device server 92 transmits a message requesting the card data from the device interfacing software portion 64 which responds by sending the card data through the intranet to the device server. The device server, if there is no basis for stopping the transaction, transmits the card data back through the intranet 16 to the device application portion 84.

In the preferred embodiment of the invention, the card input by a user or customer includes indicia which corresponds to an address associated with the user in the network. In the preferred embodiment the indicia corresponds to a uniform resource locator ("URL") address which provides information on the computer where the user information resides, as well as a directory or subdirectory which includes the user information and the name of the resource that includes the user information. The URL address may be encoded on a customer's card. The address may be encoded on track 3 of a magnetic stripe, in other locations within the magnetic stripe data or through encoding other readable indicia on the card. Alternatively, if the customer's card is a "smart" card which includes semiconductor storage thereon, the URL address associated with the customer may be included as part of the stored data on the integrated circuit chip on the customer's card. Alternatively, a URL could be derived from other data on the card by accessing a data base in which address data is correlated with other data read from the card.

Returning to the exemplary transaction, the delivery of the card data from a successfully read card is delivered responsive to the programming of the device application portion 84 to a JAVA applet associated with notifying that the card data has been entered. In response, the JAVA applet operates to generate JAVA script which configures the browser with the URL address from the card. The JAVA applet is also preferably operative to open a record schematically indicated 104 concerning the transaction, which includes the user's URL address, the time and other card data.

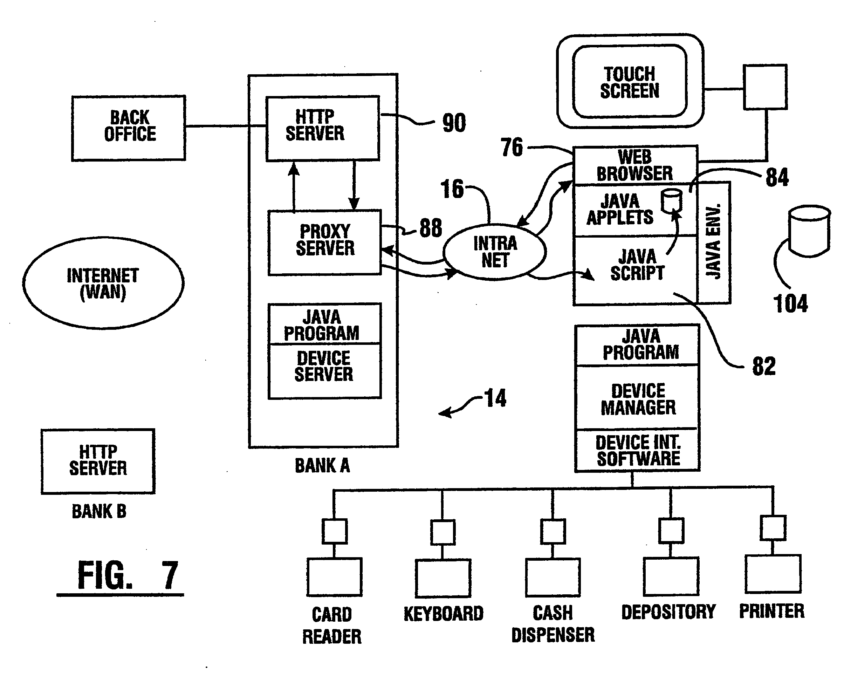

As schematically shown in Figure 7, in response to the browser 76 receiving the URL address data, the browser is operative to transmit a message through the intranet 16 to the proxy server 88. For purposes of this example, the URL address associated with the card data is that of a customer associated with the home bank which operates system 14. As a result, the customer's URL address will cause the message to be directed from the proxy server 88 to the home HTTP server 90. Alternatively, in other systems the connection may be made directly with server 90 without the intervening proxy server 88. As previously discussed, the URL address may also include data representative of the devices which are operative in the ATM.

In response to receiving the message, home HTTP server 90 finds the data corresponding to the customer's URL address data in memory and responds back to the web browser at its IP port with an HTML document. This HTML document may include a screen acknowledging the particular customer by name as well as with the name of the banking institution or other entity which operates the home bank computer system 14.

In addition, the HTML document preferably includes embedded JAVA script which has a digital signature or a means to obtain a digital signature associated with the home HTTP server 90. This digital signature is received from the JAVA script 82 and processed in a JAVA applet in the device application portion 84. The JAVA applet for processing the digital signature authenticates it and authorizes operation of the banking machine. Alternatively or in addition the applet may check the signature against a listing of digital signatures for servers which are authorized to operate the banking machine. After the applet verifies that server 90 has sent a proper digital signature, the transaction will be allowed to continue. If for some reason a proper digital signature has not been sent, the JAVA applet will stop the transaction and return banking machine 12 back to the condition prior to the start of the transaction by connecting the ATM to the address associated with the attract mode in home server 90.

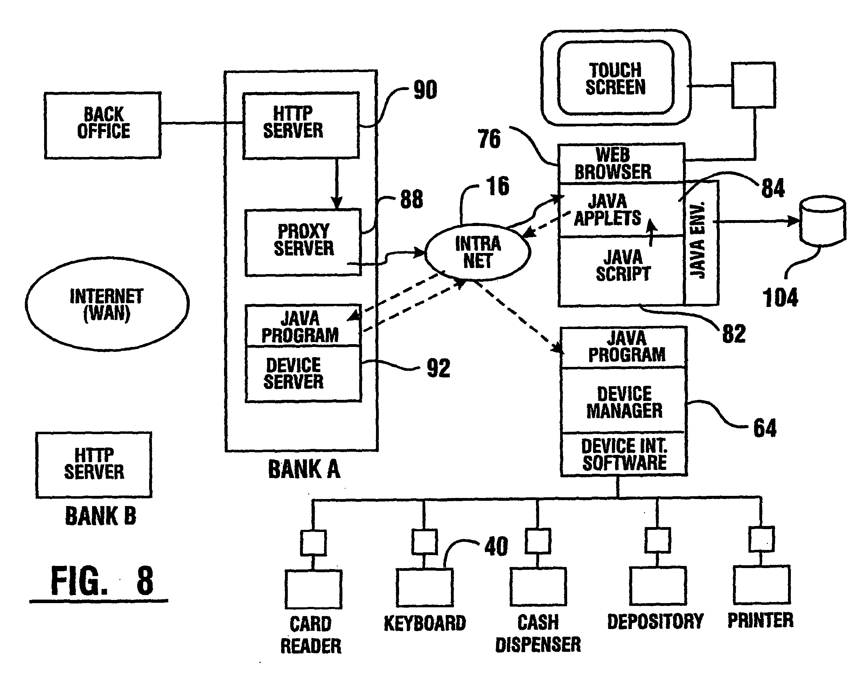

In the example it will be assumed that the digital signature sent by home server 90 is a proper signature, in which case a message is returned from the browser 76 to home server 90 indicating that the transaction may proceed. As shown in Figure 8, in this exemplary transaction the HTTP home server 90 then operates to send an HTML document to the browser 76 which includes a page or screen which instructs the customer to enter their personal identification number or PIN. This HTML document preferably includes embedded JAVA instructions to have the device application portion 84 enable the keyboard 40 of the ATM so the machine may receive the PIN number. Such a message is schematically shown in Figure 8 with the JAVA script 82 signalling the JAVA applet responsible for the keyboard that it has been requested to enable the keyboard. In response the JAVA applet in the device application portion 84 sends a message through the intranet 16 to the device server 92. The device server 92 sends a message back through the intranet to the device interfacing software portion 64 in the ATM. This message causes the device software to enable keyboard 40. The JAVA applet responsible for enabling the keyboard is also preferably operative to update the transaction record 104 to indicate that the PIN was requested.

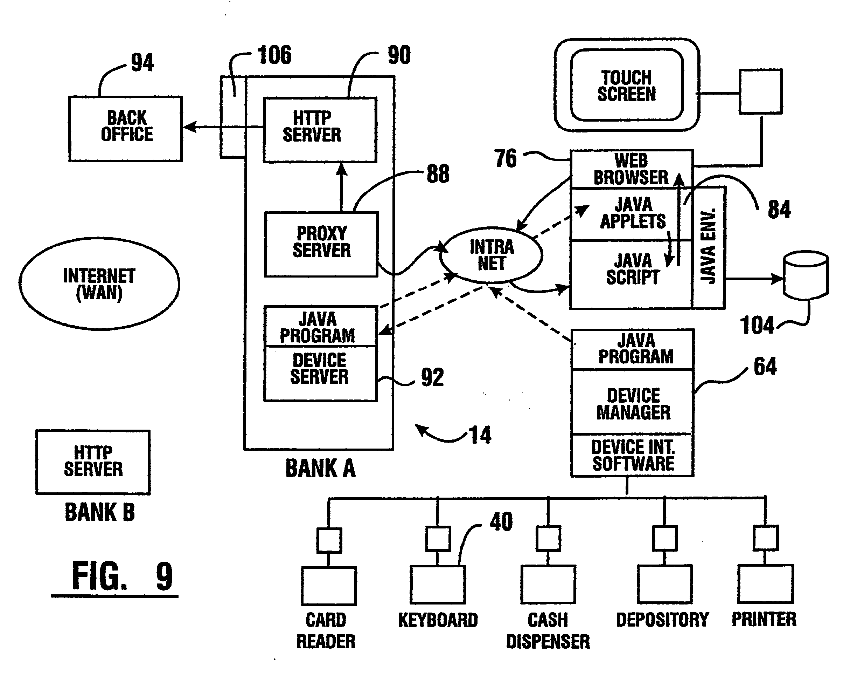

As shown in Figure 9, the PIN entered through the keyboard 40 is transmitted from the device interfacing software portion 64 to the device server 92. The device server 92 returns a message to the responsible JAVA applet in the device application portion. The JAVA applet then operates to cause the JAVA script to send a message back through the HTML document handling portion and the browser 76 to the HTTP home server 90. This message includes data representative of the PIN input by the customer.

The HTTP server 90 is then operative to either verify the PIN itself or to verify the customer's PIN number and account number by sending it to the back office 94 and waiting for a response. Alternatively, customer PIN verification may be carried out in the ATM through an appropriate applet. This can be done in situations where data on a customer's card, such as an account number, can be correlated to the customer's PIN number through an algorithm. The embedded JAVA script in the HTML messages may include the data which the applet uses to perform this verification function, including certain encryption key data. As shown schematically in Figure 9, the transaction record 104 is also appropriately updated by the applet to indicate the entry of the customer's PIN.

It should be noted that the page or screen which requests the customer to enter their PIN is generated from the home HTTP server 90. This is preferably a screen that is associated with the particular customer's URL address. This will be the interface of the customer's home bank and will be familiar to the customer. Alternatively, the customer address may access what may be essentially the customer's personal "home page" with the institution that operates computer system 14. As such, it is not only something the user is familiar with, but is ideally tailored to the user's particular transaction needs.

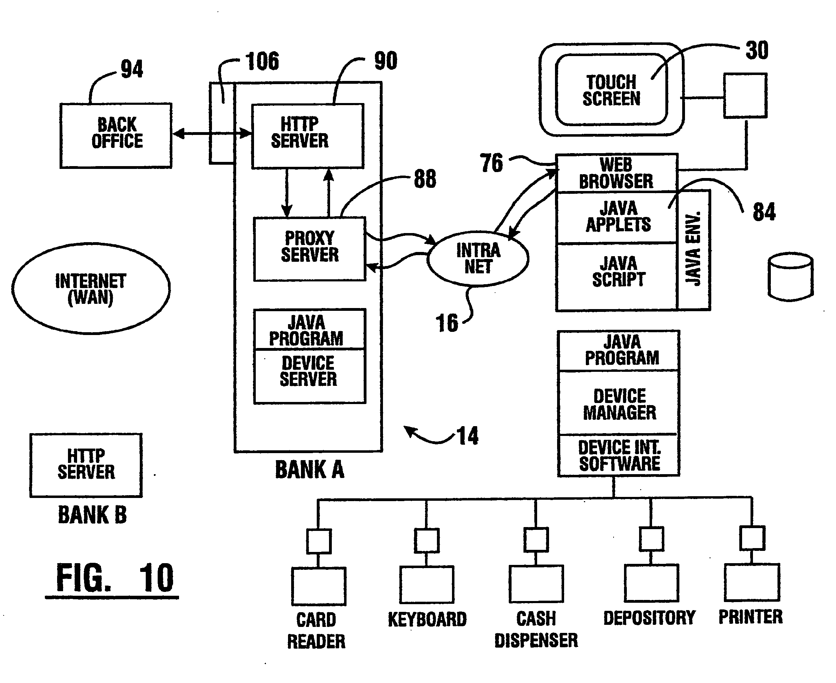

The continuation transaction flow for this exemplary transaction by a customer of the institution that operates computer network 14, is schematically shown in Figure 10. The home HTTP server 90 is operative in response to the customer inputting the correct PIN to send HTML documents to the HTML document handling portion of the software in the computer which operates the ATM. These messages may include screens which prompt the customer to select a transaction. For purposes of this example, it will be assumed that the customer inputs at the touch screen 30 a selection which corresponds to the dispense of cash, which is a common transaction at an automated banking machine.

The selection of the customer through the input device of the touch screen is communicated back through the HTML document handling portion which communicates a message to the home HTTP server 90. Server 90 then responds by sending another HTML document to the banking machine which prompts the customer to select an amount. Again the customer may input a selection on the touch screen which indicates the amount of cash requested by the customer. This input message again passes through the HTML document handling portion and the browser 76 back to the home server 90.

In response to the receipt of amount data from the customer, the home server 90 is preferably operative to communicate electronically with the back office 94 to verify that the customer has the amount requested in their account. This is preferably accomplished through a Common Gateway Interface (CGI) 106 which is in operative connection with the homer server 90. For purposes of this transaction it will be assumed that the back office 94 indicates that the money is available in the customer's account and sends a message through the CGI 106 to the home server 90 indicating that it may proceed.

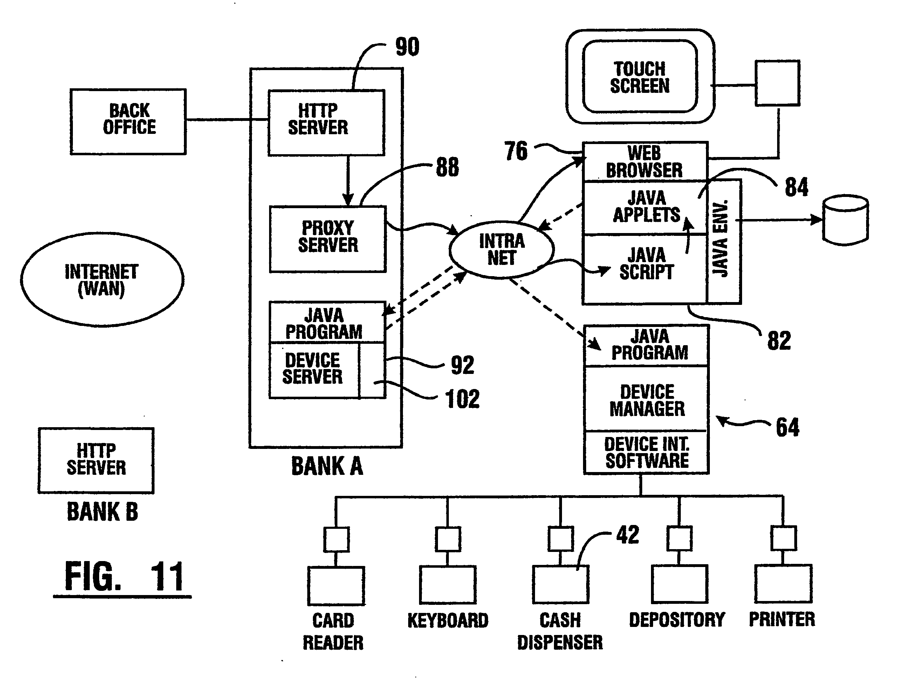

As schematically represented in Figure 11, the home server 90 then operates to send a document back to the HTML document handling portion in the ATM software. This message preferably will cause information to be displayed on the screen which advises the customer that the transaction is being processed. In addition the HTML document preferably includes JAVA script with embedded instructions which are executed and communicated to a JAVA applet associated with the operation of the sheet dispensing mechanism 42.

The message to the JAVA applet in the device application portion 84 of the software results in generation of a TCP/IP message to the device server 92. The message to the device server 92 to dispense cash is preferably analyzed by the monitor software 102 to check to see if the message is appropriate. Specifically the monitor software 102 is preferably operative to assure that the amount of cash being requested does not exceed a preset amount. It can also optionally check to verify that the amount provided to this customer within a prior period has not exceeded an amount. This may be done by the device server sending a message to the back office which includes the card data it has previously received from this customer. This message may pass through server 90 and its associated CGI, or other connection. Assuming that the dispense instruction is not prevented by a message from the back office or the monitor software, the device server 92 is operative to send a dispense message to the device interfacing software portion 64 in the ATM. The software portion 64 is thereafter operative to operate the sheet dispensing mechanism 42 to dispense the amount of cash requested by the customer.

The monitor software 102 preferably performs additional functions in the device server. For example, government regulations or good business practice may require limiting the size and amounts of deposits which may be made into an ATM. This may be advisable to prevent "money laundering" or other suspicious activities. The monitor software preferably operates to limit the amount of any single deposit to below a set limit. It further operates by communicating with the home bank back office system 94 to prevent a series of deposits within a preset time from exceeding a certain limit. The monitor software may also work in connection with the proxy server to limit certain transactions that may be carried on at the banking machine responsive to instructions from foreign servers as later discussed.

It should be noted that in a preferred embodiment of the invention the JAVA applet which is operative to send the message which causes cash to be dispensed, works in connection with another applet which controls the mix of bills dispensed to a customer. Many automated teller machines have the ability to dispense two or more denominations of currency bills. It is desirable to control the mix of bills dispensed to a customer to suit that which is available in the machine and to avoid running out of one denomination of bills before the other. The bill mix applet is preferably operable to control the bill mix in accordance with the desires of the institution operating the ATM machine as well as is in accordance with the ATM machine's capabilities. Alternatively, a JAVA applet for controlling bill mix may reside in device program 70 in device interfacing software portion 64.

As will be appreciated by those skilled in the art, the particular JAVA applets in the machine may be selectively loaded from the home server 90 at machine start up. Because the applets may be selectively delivered to particular machines, they may be tailored specifically to the particular ATMs currency dispensing capabilities.

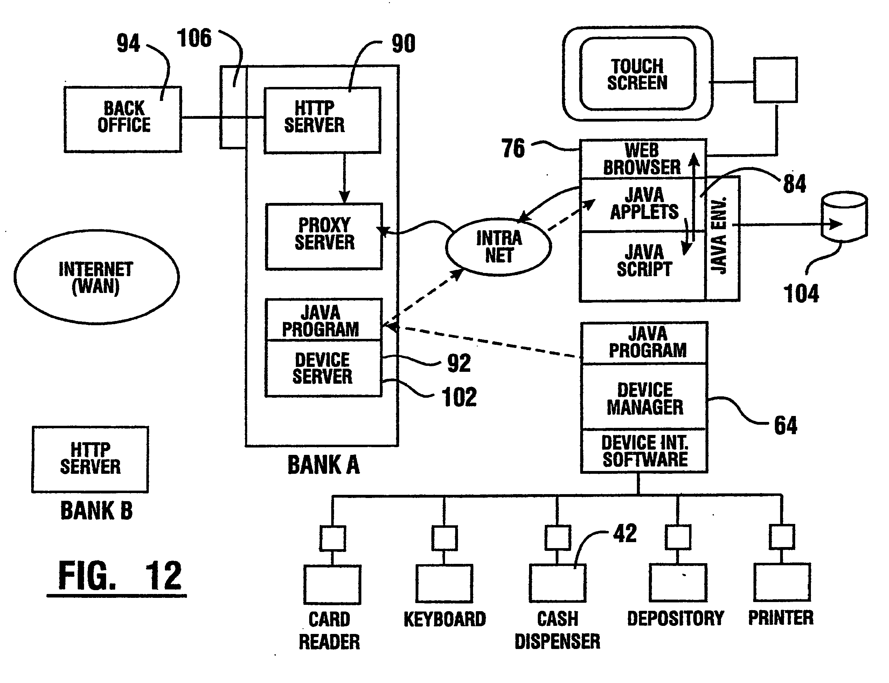

In response to the cash dispenser 42 dispensing the requested amount of cash, device interfacing software program 64 preferably operates to send a dispense operation message confirming the dispense back to the JAVA applet responsible for the dispense in the device application program 84. As represented in Figure 12, the particular applet is operative to update the transaction record 104 to indicate the dispense of currency to the customer in the particular amount. The embedded JAVA script instructions which were operative to cause the dispense of currency to the customer, also preferably include instructions to send a confirming message back to the home server 90 that the dispense is complete. The receipt of the dispense operation message indicating the cash was dispensed causes the JAVA applet to configure the HTML document handling portion to send a device response message back to the home server. The home server then is preferably operated in accordance with its programming to indicate to the back office 94 that the customer received the amount of funds dispensed. This amount is deducted from the customer's account in the records maintained by the back office system.

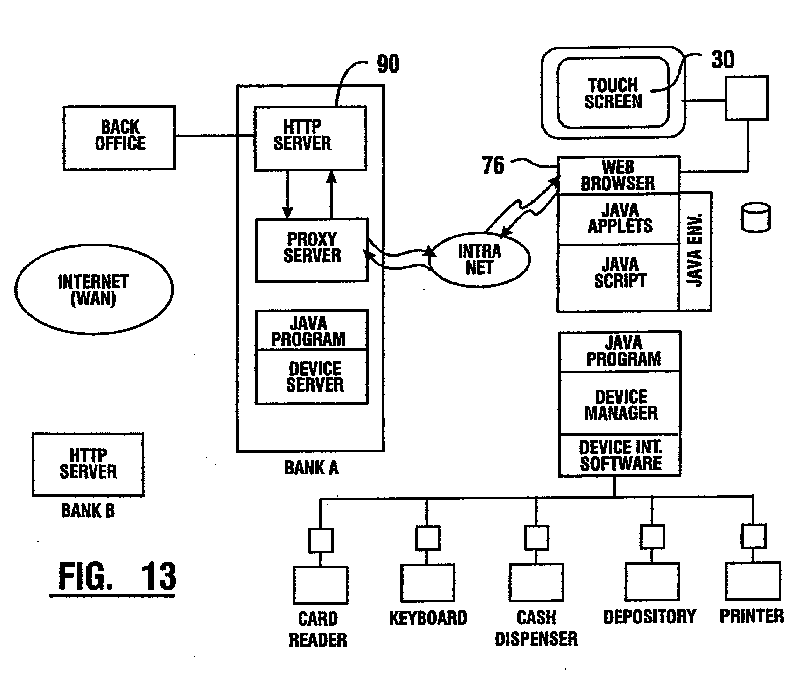

Generally during a transaction it is common to ask the customer if they wish to have a receipt for the transaction. This may be done at various times during the transaction flow. In the present example, after the cash has been dispensed the customer operating the machine is sent such a message as reflected in Figure 13. The home server 90 is operative to send an HTML document which includes a screen asking the customer if they would like a receipt. This message is displayed as part of a page on the touch screen 30 responsive to receipt of the message through the browser 76. In response to the customer indicating that they do or do not want a receipt, a message is returned to the home server. Again it should be understood that the screens displayed to the customer are those that the customer is accustomed to from his or her home institution, and may be a part of his or her unique home page.

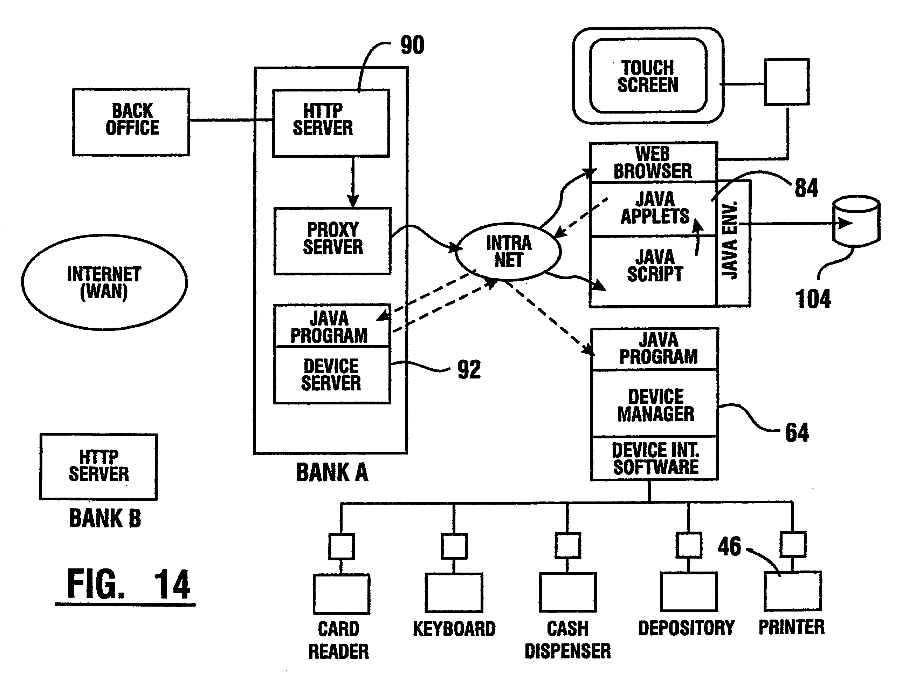

Assuming that the customer wishes to receive a transaction receipt, the home server 90 operates as shown in Figure 14 to send a document back to the ATM with embedded JAVA script indicating that a transaction receipt is to be printed. These instructions in JAVA script are communicated to the device application portion 84 which sends a TCP/IP message through the intranet to the device server 92. The device server 92 in turn communicates with the device interfacing software portion 64 in the ATM. In response to receiving the message, software portion 64 is operative to cause the printer 46 to print the customer's transaction receipt. The JAVA applet responsible for enabling the printer is also preferably operative to update the transaction record 104.

It should be understood that even if the customer does not wish to have a receipt it is desirable to print a record of the transaction in hard copy through the journal printer 48. This may be accomplished in response to imbedded instructions which are part of the same document from the home server 90 which causes the transaction receipt for the customer to be printed, or may be part of a separate document which indicates that the customer has declined the option to receive a transaction receipt. Alternatively, the journal printer may be actuated responsive to other applets such as the applet which causes the dispense of cash, or in another manner chosen by the operator of the ATM. As will be appreciated from the foregoing description the operation of the preferred embodiment of the ATM is inherently flexible and programmable to meet the needs of the system operator.

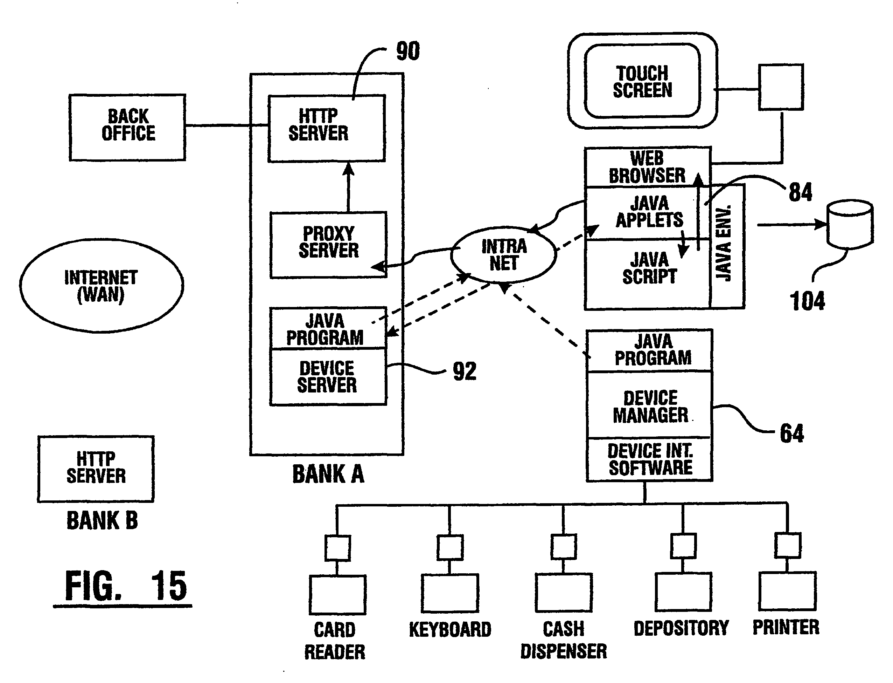

As shown in Figure 15 upon completion of the printing of the transaction receipt, the software portion 64 is preferably operative to send a device operation message to the device server 92 which is indicative that the requested device function was carried out successfully. The device server 92 is operative to send a corresponding device operation message to the device application portion 84, and in the preferred embodiment to the particular JAVA applet responsible for the printing of the receipt. The JAVA applet in turn configures the HTML document handling portion to generate a message back to the home server in the form of a device response message to indicate that the receipt was printed for the customer.

Having received cash and a receipt, the customer is then prompted by an HTML document from the home server 90 to indicate whether they wish to conduct another transaction. A page or screen prompting the customer in this regard is displayed at the touch screen 30. For purposes of this example it will be assumed that the customer does not want another transaction and a message to that effect is returned through the HTML document handling portion back to the home server 90.

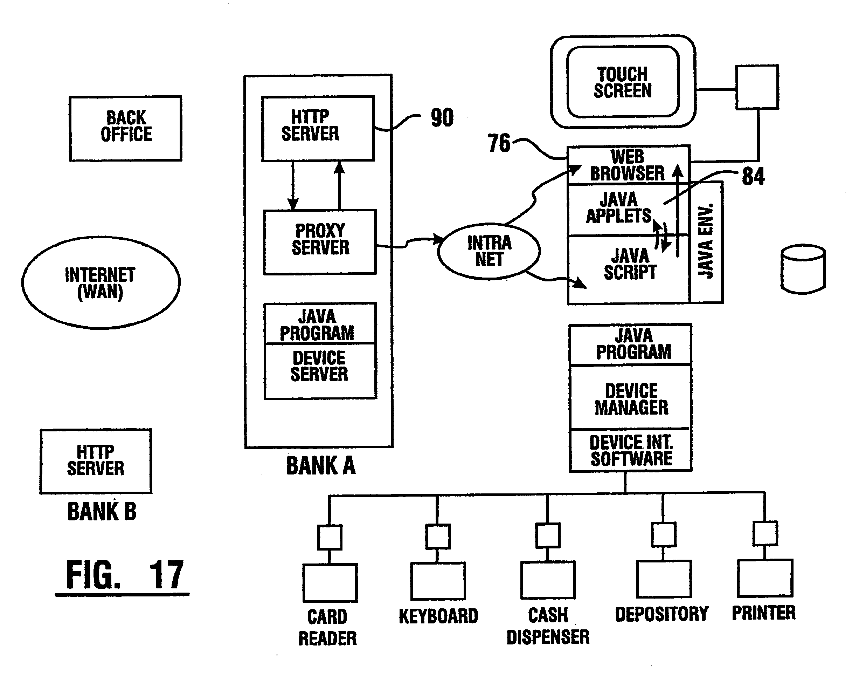

As shown schematically in Figure 17 in response to receiving a message that the customer is done, the home server 90 is operative to send a "go home" message to the ATM. This message preferably includes an HTML document thanking the customer, as well as embedded JAVA script which calls the JAVA applet which eventually returns the HTML document handling portion of the ATM back into connection with the URL address on the home server 90 which carries on the messages for the so called "attract mode".

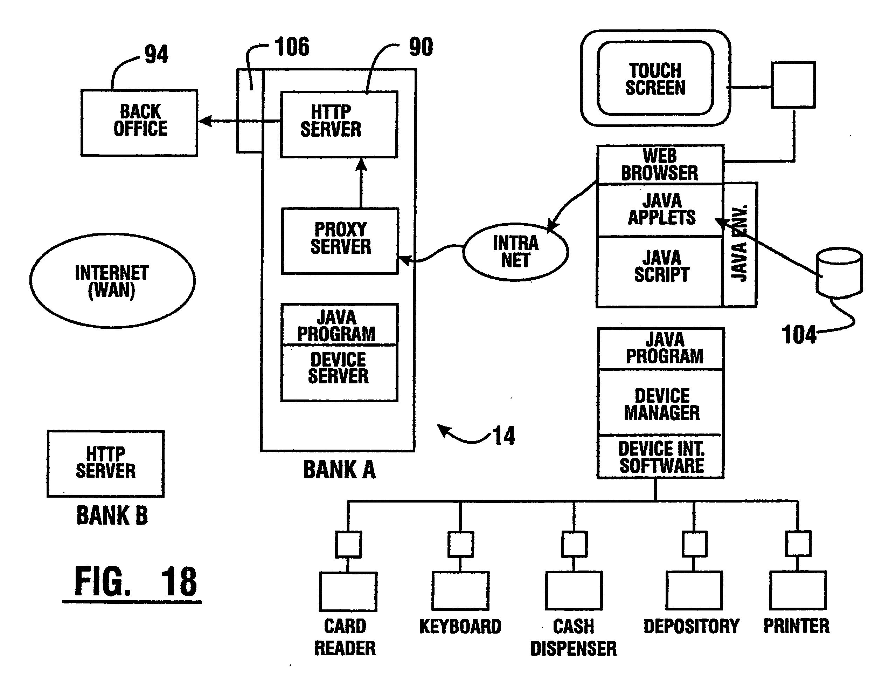

As schematically indicated in Figure 18, the "go home" command applet is operative to configure the browser 76. After the HTML document handling portion is configured by the JAVA applet to return home, the JAVA applet may be configured to deliver to home server 90 information from the transaction record 104 concerning the transaction that was just completed. Because the exemplary transaction was with a customer of the institution that operates the computer system 14, all the data concerning that transaction should already be recorded in the back office 94. However it will be appreciated that this will not be the case if the transaction was conducted in response to messages from a server operated by a different institution. Thus, the information from the transaction record 104 may be delivered in response to a "go home" command to the home server 90 and through the CGI to the back office system 94 where it can be identified as duplicate information and discarded.

Of course in other embodiments transaction information may be stored in a database for extended periods rather than being returned after each transaction. Alternatively the ATM 12 of the present invention may include applets which are operable to deliver transaction record information to addresses other than that of the home server, if that is desired by the operator of system 14.

The operation of the computer system when a "foreign" user uses the ATM 12 is graphically represented with regard to Figures 19 through 24. A transaction with a foreign user who is not a customer of the institution that operates ATM 12 and computer system 14, will be operated under the control of the home server 90 and will proceed in the manner of the prior example through the point where the customer inputs their card. The customer inputs a card having indicia corresponding to a URL address that does not correspond to the home server 90. The HTML document handling portion is operative to configure a message addressed to a URL address that corresponds to the indicia on the customer's card. This message is delivered to the proxy server 88 which in turn passes the message to the wide area network 18. From the wide area network the message proceeds to the foreign server corresponding to the customer's URL address. For purposes of this example the foreign server corresponds to server 96 which is connected to the Internet.

In the preferred embodiment of the invention proxy server 88 includes screening software graphically indicated 107. Screening software is preferably operable to check addresses to which messages are being directed by the ATM and to selectively prevent the sending of messages to particular addresses. This serves as a "fire wall" and is desirable for purposes of preventing fraud in the system.

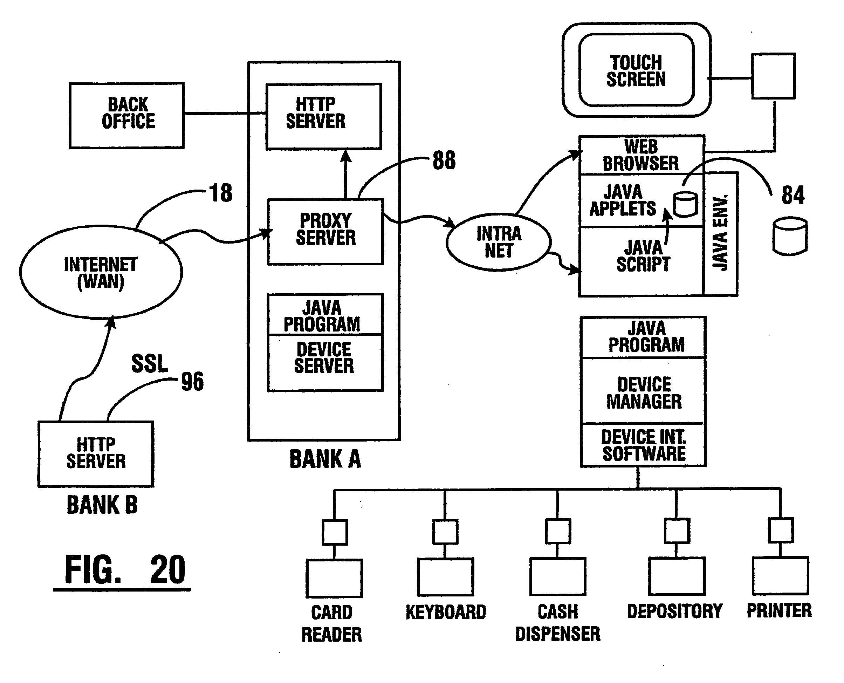

As shown in Figure 20, the foreign server 96 is preferably operable to communicate documents to the ATM 12 back through the wide area network 18. This is preferably done using a secure socket connection ("SSC") so as to minimize the risk of interception of the messages. Of course other techniques, including encryption message techniques may be used to minimize the risk of interception of the messages.

As schematically represented in Figure 20 the response document from foreign server 96 preferably includes embedded JAVA script representative of a digital signature which corresponds to and identifies the foreign server 96. An applet device in application portion 84 in the ATM preferably operates to authorize the digital signature in the manner described in the prior example, and sends a message indicating that the transaction has been authorized. The digital identity of the foreign institution will be stored in the ATM and eventually recorded in the back office 94.

It should be noted that the HTML documents from the foreign server 96 produce the pages or screens of the foreign institution which the foreign customer is accustomed to seeing. Preferably these pages correspond to the foreign user's "home page" which are tailored specifically to the needs of the particular user.

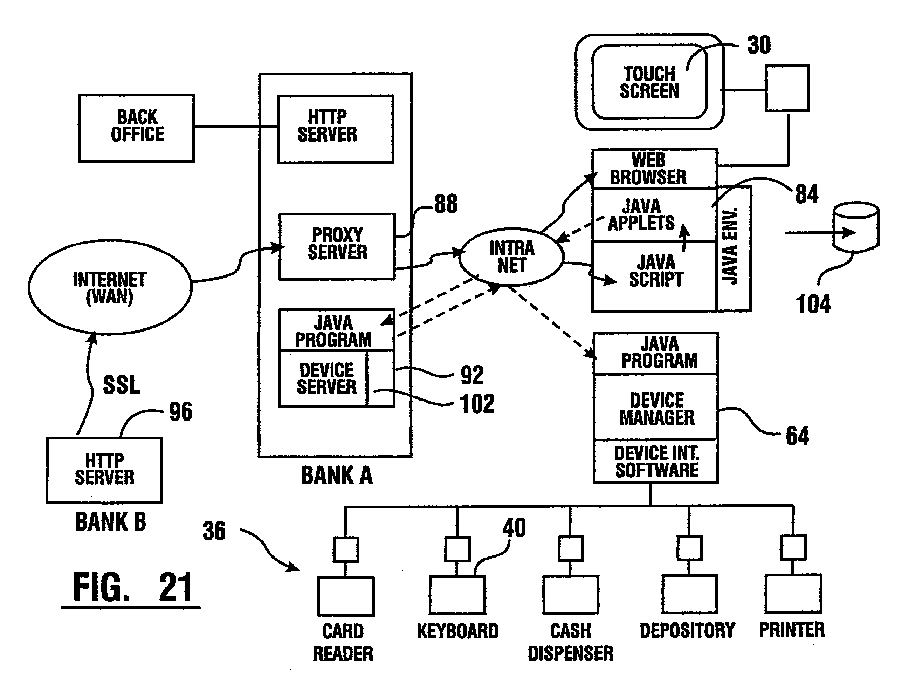

Figure 21 shows an example of a document coming from the foreign server 96 to the ATM 12. The document from the foreign server may include embedded JAVA script which enables operation of the JAVA applets in the manner previously discussed to operate the devices 36 in the ATM. As shown in Figure 21 the TCP/IP messages to the devices from the JAVA applets pass from the device application portion 84 to the device server 92, and to the device interfacing software portion 64 in the ATM. Device operation messages take a reverse path. As these messages pass through the device server 92, monitor software 102 monitors them to minimize the risk of fraud or abuse.

As indicated in Figure 21, the documents from the foreign server 96 may be operative to display at the touch screen 30 a request for the customer to input their PIN. The embedded JAVA script instructions would, as in the sample transaction previously discussed, include instructions that enable the keyboard 40 to accept the customer's PIN. As in the prior example, a transaction record 104 concerning this transaction would be opened by the device application software portion.

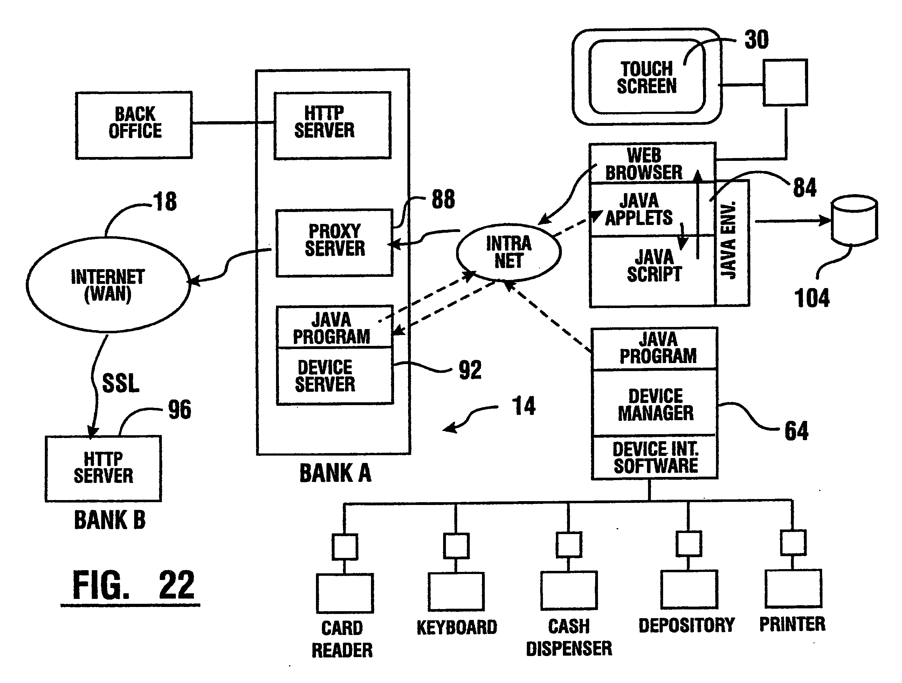

Figure 22 indicates the return of the device operation message and PIN data to the JAVA applet which in turn transmits the data back to the foreign server 96 through the wide area network 18 using the secure socket connection. From this point the transaction proceeds generally as previously described, except that the foreign server 96 sends the HTML documents and receives the TCP/IP messages from the HTML document handling portion of the ATM. The foreign server 96 includes the JAVA application software necessary to include the embedded JAVA script in the documents that are sent to the ATM to operate the devices 36 in the machine. As the foreign server 96 operates the machine however, the monitor software 102 in the device server 92 is operative to monitor the messages in the manner previously discussed. Such monitoring would for example, operate to prevent the dispense of unduly large amounts of currency out of the machine.

As can also be appreciated from the foregoing disclosure, the foreign server 96 may communicate to the user through the touch screen in a language that is different from that normally used by the customers of the institution that operates the computer system 14. As a result the HTML documents may display requests to dispense currency of a type or in an amount which is not included in the ATM. To accommodate this situation an applet is included in the device application portion 84 to deal with requests for foreign currency. The foreign currency applet causes the ATM to send a message back to its home server for purposes of calculating a closest amount which may be provided to the customer in the available currency in the ATM which corresponds to what the customer requested. As will be appreciated, this applet will be operative to call the particular function address within the home server 90 that is capable of providing this function. When the dispense is made the applet is also operative to indicate to server 96 that the amount dispensed differs somewhat from the amount the customer requested. Of course in other embodiments, other approaches may be used.

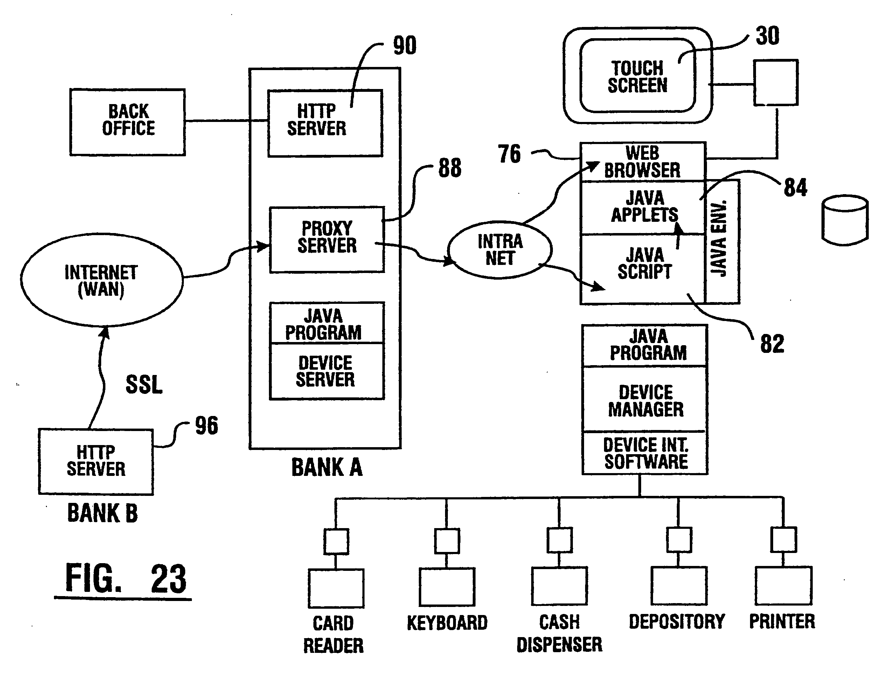

As represented in Figure 23, when the foreign customer has completed their transactions as indicated through the touch screen 30, the foreign server 96 is operative to send the "go home" message back to the ATM. The receipt of this message is operative in the manner previously described to cause the device application portion 84 to operate responsive to the embedded JAVA script instructions to configure the HTML document handling portion to cause the browser 76 to reestablish communication with the home server 90.

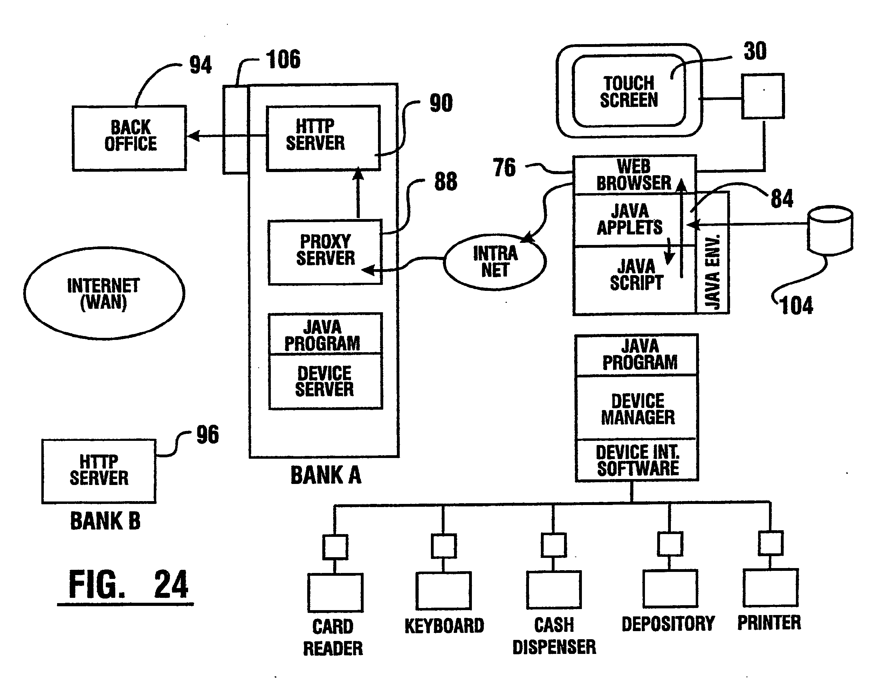

As indicated in Figure 24 the applet in the device application portion 84 which processes the "go home" message is preferably operative to reconnect to the home server 90 as well as to send the transaction record information in record 104. This transaction record information which includes the customer name, the foreign institution name, digital identifier, amount information and all other pertinent transaction data is communicated to server 90 through the CGI 106 to the home bank's back office 94. This information is stored in the back office for later use for purposes of settlement with the foreign bank operating the foreign server 96.

It will be appreciated that the preferred embodiment of the automated banking machine and system of the present invention provides the advantage that when the machine is connected to a wide area network such as the Internet, customers are able to carry out their banking transactions virtually anywhere in the world. Further, despite the broad capabilities of the system, because the machine is monitored locally, both in terms of connection and activity, the risk of fraud is minimized.

While the preferred embodiment of the automated banking machine and system of the present invention is shown with regard to a particular type of machine that is made specifically for connectibility to wide area networks, conventional automated banking machines may also be adapted to include such capability. Specifically the HTML document handling portion and device application portions may be included with other conventional software which operates within an automated banking machine. This enables such ATMs to operate either in the conventional proprietary network or as part of a wide area network. In addition, automated banking machines may be configured to operate their devices through the device interfacing software portion of the invention or through a different software interface when operating in a conventional network. Such machines may switch to requiring device messages to be passed through a device server when operating under the control of a server within the wide area network to maintain security within the system. In this way a single ATM could operate in proprietary networks in the manner of current ATMs as well as in the network configuration of the system of the invention.

Alternative embodiments of the invention operate to communicate transaction messages used in a proprietary ATM network. This may be accomplished by using a CGI in connection with either the HTML document handling portion of the ATM or the HTTP home server. The CGI operates in connection with a message conversion program to cull the necessary data from the HTML documents and TCP/IP messages and generates the transaction request messages appropriate for the proprietary transaction network. Likewise, the message conversion program and CGI operate to receive function command messages from the proprietary network and convert them to appropriate HTML documents and/or TCP/IP messages for use by the ATM. Because these proprietary network formats are defined and the data necessary to produce and interpret the messages are known, the use of the ATM 12 directly in a conventional proprietary ATM network is achieved.

The ability of ATM 12 to communicate in a proprietary network also enables operation of the ATM in a manner in which the interface is generated by a user's home institution in the manner previously described, but in which transactions are authorized through messages directed through a proprietary ATM network. This achieves the security of using the proprietary network while providing the customer with the advantages of the familiar home bank interface and/or "personal home page" interface.

A further advantage of the system configuration of the preferred embodiment is that it has enhanced flexibility for communicating messages associated with the ATM. The device manager 68 preferably generates status messages associated with the status of devices 36. These status messages may commonly represent information about conditions which exist at the devices. Such messages may indicate that supplies of paper for printers or currency, are low or are depleted. Other messages may indicate that devices are not functioning properly. Often such messages indicate that the ATM requires servicing.

The device interfacing software portion 64 communicates through the intranet 16 using TCP/IP messages. While the messages associated with transactions previously described are directed to the device server 92, the software portion 64 may be configured to address fault messages to other addresses in the intranet. For example, such fault messages may be directed to a software application which delivers messages to a service provider. Further, fault messages may be selectively directed based on the nature of the fault indicated. For example, fault messages indicative of a need to replenish currency or supplies may be directed to an address in the intranet associated with an entity who has responsibility for replenishing supplies. Alternatively, fault messages which indicate a need for other types of servicing may be directed to an address associated with an entity who can provide the type of servicing required.

Alternatively, the selective dispatching of fault messages to addresses in the intranet 16 may be accomplished by appropriately configuring device server 92. In addition, either software portion 64 or device server 92 may direct fault messages from the ATMs to a fault handling system such as to a computer operating Event Management System™ software available from Diebold, Incorporated. Such software is operative to resolve the nature of the fault condition and to notify appropriate personnel of the corrective action to be taken.

Thus the new automated banking machine and system of the present invention achieves the above stated objectives, eliminates difficulties encountered in the use of prior devices and systems, solves problems and attains the desirable results described herein.

In the foregoing description certain terms have been used for brevity, clarity and understanding. However no unnecessary limitations are to be implied therefrom because such terms are for descriptive purposes and are intended to be broadly construed. Moreover the descriptions and illustrations herein are by way of examples and the invention is not limited to the details shown and described.

In the following claims any feature described as a means for performing a function shall be construed as encompassing any means capable of performing the recited function and shall not be deemed limited to the particular means shown in the foregoing description or mere equivalents thereof.

Aspects of the invention are defined in the following series of numbered clauses.
1. Apparatus comprising:
   a banking machine, including:
      an output device, wherein such output device outputs information to a user;
      an input device, wherein a user is enabled to input messages to said machine;
      a sheet dispenser mechanism;
      a computer, wherein said computer is in operative connection with the output device, the input device and the sheet dispenser mechanism;
      software executable in said computer, said software including:
         an HTML document handling portion in operative connection with the input device and the output device, wherein said HTML document handling portion is operative to receive HTML format documents;
         a device application portion in operative interfacing relation with the HTML document handling portion, wherein said device application portion is in operative connection with the sheet dispenser, and wherein said device application portion is operative responsive to the HTML document handling portion receiving an HTML format document including a dispense instruction to cause the sheet dispenser mechanism to dispense at least one sheet.
2. The apparatus according to clause and further comprising a card reader mechanism in operative connection with the HTML document handling portion of the software, and wherein the card reader is operative to accept a card, wherein said card includes indicia thereon, and wherein said indicia corresponds with a system address associated with the user, and wherein said HTML document handling portion is operative to cause a message to be generated to the system address responsive to said card indicia.
3. The apparatus according to clause 2 wherein the system address for the user includes a URL address.
4. The apparatus according to clause 1 wherein in said banking machine said HTML document handling portion and said device application portion both communicate messages through TCP/IP, and wherein said HTML document handling portion communicates at a first IP port and said device application portion communicates at a second IP port.
5. The apparatus according to clause 4 wherein the software in the banking machine further comprises a device interfacing software portion, and wherein said device interfacing software portion is operative to interface with said sheet dispenser mechanism, wherein said application portion interfaces with said sheet dispenser mechanism through said device interfacing software portion, and wherein said device interfacing software portion communicates at a third IP port.
6. The apparatus according to clause 1 wherein said HTML document handling portion includes a browser.
7. The apparatus according to clause 1 wherein said dispense instruction is an embedded instruction.
8. The apparatus according to clause 1 wherein said dispense instruction is in JAVA script.
9. The apparatus according to clause 1 wherein said device application portion includes a first applet, wherein said first applet is operative to cause operation of said sheet dispenser mechanism.
10. The apparatus according to clause 1 wherein said banking machine further comprises a printer mechanism, wherein said printer mechanism is in operative connection with said computer, and wherein said printer mechanism is operative responsive to the device application portion of the software, and wherein said printer mechanism is operative to print responsive to receipt of a print instruction by said HTML document handling portion.
11. The apparatus according to clause 1 wherein said banking machine further comprises at least one device, said device being one of a printer mechanism, a card reader mechanism or a depository mechanism, and wherein said device is operative responsive to the device application portion of the software, and wherein the device is operative responsive to receipt of a device instruction by the HTML document handling portion.
12. The apparatus according to clause 1 wherein said dispenser mechanism is operative responsive to dispensing said sheets to cause a dispenser operation message to be delivered to the device application portion of the software, and wherein said HTML document handling portion is operative responsive to delivery of the dispenser operation message to output a dispense response message from said HTML document handling portion.
13. The apparatus according to clause 11 wherein the device is operative responsive to its operation to cause a device operation message to be delivered to the device application portion of the software, and wherein the HTML document handling portion is operative responsive to the delivery of the device operation message to output a device response message from the HTML document handling portion.
14. The apparatus according to clause 12 wherein the HTML document including the dispense instruction includes a response instruction, wherein said response instruction is operative to cause the output of the dispense response message responsive to delivery of the dispense operation message to the device application portion of the software.
15. The apparatus according to clause 1 and wherein said banking machine further comprises a plurality of devices, said devices operative responsive to the device application portion of the software, and wherein said device application portion includes at least one applet operative to control at least one of said plurality of devices.
16. The apparatus according to clause 15 and wherein said software further comprises a device interfacing software portion operative to interface with said devices, and wherein said device interfacing software portion includes a device program operative to interface with said one applet.
17. The apparatus according to clause 16 wherein said applet is operative to communicate through a second IP port and the device program is operative to communicate through a third IP port.
18. The apparatus according to clause 1 and further comprising a home HTTP server in operative connection with the HTML document handling portion of the banking machine, and wherein the home HTTP server is operative to send HTML documents to the HTML document handling portion of the software in the banking machine.
19. The apparatus according to clause 18 wherein the home HTTP server is operative to send the dispense instruction to the banking machine.
20. The apparatus according to clause 18 wherein the home HTTP server includes a home address, and wherein the HTML document handling portion of the software is operative to send a message to the home address in response to a user input at said input device.
21. The apparatus according to clause 18 wherein said home HTTP server has a home address, and wherein said banking machine further comprises a card reader mechanism in operative connection with said device application portion of the software, whereby said card reader mechanism is operative to read card indicia on a card input by a user, and wherein said HTML document handling portion is operative to send a message to the home HTTP server responsive to the card indicia corresponding to the home address.
22. The apparatus according to clause 21 wherein said card indicia further corresponds to identifying information associated with a file, wherein said file is associated with the user, and wherein said file is stored in operative connection with the home HTTP server.
23. The apparatus according to clause 22 wherein said card indicia includes a URL address associated with the user.
24. The apparatus according to clause 22 wherein the file includes at least one HTML document associated with the user.
25. The apparatus according to clause 18 and further comprising a proxy server in operative connection with the home HTTP server, wherein the home HTTP server has a home address, and said HTML document handling portion has a machine address, and wherein said proxy server is operative to direct messages from said banking machine to the home HTTP server responsive to said messages including the home address.
26. The apparatus according to clause 25 wherein the proxy server is also in operative connection with a wide area network, and wherein said wide area network includes a foreign server, wherein said foreign server has a foreign address, and wherein said banking machine further includes an address input device in operative connection with the HTML document handling portion, and wherein the HTML document handling portion is operative responsive to input of the foreign address through said address input device to generate a foreign message addressed to the foreign address, and wherein said proxy server is operative responsive to receipt of the foreign address to pass the foreign message to said wide area network
27. The apparatus according to clause 26 wherein said proxy server includes screening software, wherein said screening software is operative to prevent the sending of the foreign message to at least one selected foreign address.
28. The apparatus according to clause 26 wherein said proxy server is operative responsive to receiving a foreign response message from said foreign address directed to said machine address to pass the message to said HTML document handling portion of the software in said banking machine.
29. The apparatus according to clause 5 and further comprising a device server, wherein said device application portion of said software and said device interfacing software portion communicate through said device server.
30. The apparatus according to clause 29 wherein said device server includes monitor software, wherein said monitor software is operative to limit operation of said sheet dispensing mechanism.
   Having described the features, discoveries and principles of the invention, the manner in which it is constructed and operated and the advantages and useful results attained; the new and useful structures, devices, elements, arrangements, parts, combinations, systems, equipment, operations, methods, processes and relationships are set forth in the appended claims.

## Claims

1. An Automated Teller Machine (ATM) comprising:
at least one computer;
a browser operating in the at least one computer;
a currency sheet dispenser mechanism in operative connection with the at least one computer, wherein the currency sheet dispenser mechanism is operative responsive to receipt of at least one document by the browser, to dispense at least one sheet of currency from the ATM.

2. The ATM according to claim 1, wherein the at least one document comprises at least one mark up language document.

3. The ATM according to claim 2, wherein the at least one mark up language document comprises a hypertext mark up language (HTML) document.

4. The ATM according to claims 1, 2, or 3, wherein the at least one document includes a dispense instruction, wherein the browser is operative responsive to the dispense instruction to cause the at least one computer to cause the currency sheet dispenser mechanism to dispense the at least one sheet of currency.

5. The ATM according to claims 1, 2, 3, or 4, further comprising a reading device in operative connection with the at least one computer, wherein the reading device is operative to read indicia representative of a system address, wherein the browser is responsive to the indicia read by the reading device to cause the at least one computer to access the at least one document.

6. The ATM according to claim 5, wherein the reading device includes a card reader, wherein the card reader is operative to read the indicia from a card.

7. A method comprising:
a) operating at least one computer in an Automated Teller Machine (ATM), wherein the at least one computer is adapted to receive mark up language documents;
b) operating the at least one computer to receive at least one mark up language document;
c) operating the computer responsive to the at least one mark up language document to cause at least one sheet of currency to be dispensed from the ATM.

8. The method according to claim 7, wherein the ATM includes an HTML document handling portion operating in the at least one computer, wherein in (b) the HTML document handling portion accesses the at least one mark up language document.

9. The method according to claim 7, wherein the ATM includes a browser operating in the at least one computer, wherein in (b) the browser accesses the at least one mark up language document.

10. The method according to claims 7, 8 or 9, wherein in (b) the at least one mark up language document comprises a hypertext mark up language (HTML) document.

11. The method according to claims 7, 8, 9, or 10, wherein the ATM includes a currency sheet dispenser mechanism, wherein in (b) the at least one markup language document includes a dispense instruction, wherein (c) includes the at least one computer causing the currency sheet dispenser mechanism to dispense the at least one sheet of currency responsive to the dispense instruction.

12. The method according to claims 7, 8, 9, or 10, wherein the ATM includes a reading device, wherein prior to step (b) further comprising the step of:
d) reading indicia with the reading device, wherein the at least one computer is operative responsive to the indicia to cause the computer to perform step (b).

13. The method according to claims 12, wherein the reading device includes a card reader, wherein (d) includes reading indicia from a card using the card reader.

14. A method comprising:
(a) operating screening software in at least one computer in an Automated Teller Machine (ATM), wherein the screening software is operative to cause the ATM to carry out at least one transaction responsive to communication with at least one authorized system address and to prevent the ATM from carrying out at least one transaction responsive to communication with at least one unauthorized system address;
(b) dispensing currency from the ATM to an authorized user responsive to communication of the ATM with at least one authorized system address.

15. An Automated Teller Machine (ATM) comprising:
at least one hardware device in the ATM, wherein the at least one hardware device includes at least one available device, wherein each respective available device is selectively operative to carry out a respective different type of function;
at least one computer, wherein the at least one computer is in operative connection with each hardware device;
software executable in the computer, wherein the software includes a browser, wherein the software is operative to enable the computer to access an HTML document which corresponds to the availability of the hardware devices in the ATM.

16. An Automated Teller Machine (ATM) comprising:
at least one computer;
a plurality of hardware devices in the ATM, wherein the hardware devices are in operative connection with the at least one computer, wherein at least one of the hardware devices includes a currency dispenser;
a device application software portion operative in the computer, wherein the device application software portion includes a plurality of applets which are each associated with at least one corresponding hardware device; and
a device interfacing software portion operative in the at least one computer, wherein the device interfacing software portion is operative to control the operation of each of the hardware devices; and
document handing software operative in the at least one computer, wherein the device application software portion is operative responsive to the document handling software to cause the hardware devices to operate through communication with the device interfacing software portion.

17. An Automated Teller Machine (ATM) comprising:
a currency sheet dispenser;
a card reader device, wherein the card reader device is operative to read card data from cards input by users of the ATM;
a computer in operative connection with the card reader device and the currency sheet dispenser; and
software executable in the computer, wherein the software is operative to generate a server address and to operate the computer to access the server address responsive to the card data.

18. A method comprising:
a) receiving user input with at least one input device of an Automated Teller Machine (ATM) including a currency dispenser mechanism from a user of the ATM, wherein the input includes input data uniquely associated with a user of the ATM, wherein the currency dispenser mechanism is operative to dispense currency from the ATM to a user of the ATM;
b) executing software with a computer of the ATM to generate a server address based on the received input data;
c) executing software with the computer of the ATM to access the generated server address.

19. An Automated Teller Machine (ATM) comprising
at least one computer
a plurality of devices in operative connection with the at least one computer, wherein the plurality of devices includes a currency sheet dispenser;
an HTTP server operative in the at least one computer;
at least one HTML document accessible through the HTTP server, wherein the least one document includes indicia corresponding to a status of at least one of the devices.

20. A method comprising:
operating a device in an Automated Teller Machine (ATM) that comprises a currency sheet dispenser, wherein the device has an associated status; and
generating at least one first HTML document including first instructions corresponding to the status of the device.

21. An Automated Teller Machine (ATM) comprising:
a computer;
a browser operating in the computer;
a sheet dispenser mechanism in operative connection with the computer, wherein the sheet dispenser mechanism is operative responsive to receipt of at least one HTML format document by the browser, to dispense at least one sheet from the ATM.

22. Computer software for implementing the method of any of claims 7 to 14, 18 or 20.

23. Computer software executable in an apparatus for implementing the Automated Teller Machine (ATM) of any of claims 1 to 6, 15 to 17, 19 or 21.
